# EUROPEAN PATENT SPECIFICATION

(11) **EP 1 585 392 B1**
(45) Date of publication and mention of the grant of the patent: **18.03.2009**
(21) Application number: 04700167.2
(22) Date of filing: 05.01.2004
(51) Int. Cl.: A01N 61/00, A01N 39/02, A01N 35/10

(54) **HERBICIDES INHIBITING THE ACTION OF PLANT ACETYL-COA CARBOXYLASE FOR USE AS PESTICIDES.**
PFLANZLICHE ACETYL-COA CARBOXYLASE-HEMMENDE HERBIZIDE ALS PESTIZIDE
HERBICIDES INHIBANT L'ACTION DE L'ACETYL-COA CARBOXYLASE VEGETALE UTILISES COMME PESTICIDES

(30) Priority: 06.01.2003 US 421117 P
(43) Date of publication of application: 19.10.2005
(73) Proprietor: YISSUM RESEARCH DEVELOPMENT COMPANY OF THE HEBREW UNIVERSITY OF JERUSALEM, Givat Ram, Jerusalem 91390 (IL); State of Israel, Ministry of Agriculture & Rural Development, Agricultural Research Organization (A.R.O.), Volcani Center, 50250 Bet Dagan (IL)
(72) Inventor: APPLEBAUM, Shalom W., 76354 Rehovot (IL); RUBIN, Baruch, 76804 Mazkeret Batya (IL); RAFAELI, Ada, 74063 Ness Ziona (IL)
(74) Representative: Minoja, Fabrizio
(86) International application number: PCT/IL2004/000002
(87) International publication number: WO 2004/060058

(56) References cited:
- DATABASE CAPLUS [Online] CHEMICAL ABSTRACTS SERVICE, COLUMBUS, OHIO, US; 15 September 2003 (2003-09-15), ELIYAHU, DORIT ET AL: "Moth sex-pheromone biosynthesis is inhibited by the herbicide diclofop" XP002283898 retrieved from STN accession no. STN Database accession no. 2003:722569 cited in the application & PESTICIDE BIOCHEMISTRY AND PHYSIOLOGY , 77(2), 75-81 CODEN: PCBPBS; ISSN: 0048-3575 PESTICIDE BIOCHEMISTRY AND PHYSIOLOGY , 77(2), 75-81 CODEN: PCBPBS; ISSN: 0048-3575, 2003,
- 2000, BRITISH CROP PROTECTION COUNCIL, CDS TOMLIN (ED), FARNHAM, GB , "THE PESTICIDE MANUAL", TWELFTH EDITION , XP002283897 n° 232, p.279 n°767, p.914-915
- JOANNA JELENSKA ET AL.: "The Carboxyltransferase Activity of the Apicoplast Acetyl-CoA Carboxylase of toxoplasma gondii is the target of Aryloxyphenoxypropionate inhibitors" THE JOURNAL OF BIOLOGICAL CHEMISTRY, vol. 277, no. 26, 2002, pages 23208-23215,

## Description

### FIELD OF THE INVENTION

This invention relates to the use of herbicides for controlling insect pests.

### BACKGROUND OF THE INVENTION

The following are publications describing relevant prior art.
1. Rafaeli, A. Neuroendocrine control of pheromone biosynthesis in moths. Int. Rev. Cytology 213, 49-92 (2001).
2. Sasaki, Y, Konishi, T., and Nagano, Y The compartmentation of acetyl-coenzyme A carboxylase in plants. Plant Physiol. 108, 445-449 (1995).
3. Kemal, C. and Casida, J.E. Coenzyme A esters of 2-aryloxyphenoxypropionate herbicides and 2-arylpropionate antiinflammatory drugs are potent and stereoselective inhibitors of rat liver acetyl-CoA carboxylase. Life Sci. 50, 533-540 (1992).
4. Goldring, J.P. and Read, J.S. Insect acetyl-CoA carboxylase: enzyme activity during the larval, pupal and adult stages of insect development. Comp. Biochem. and Physiol. B 106, 855-858 (1993).
5. Franz J.M., Bogenschutz, H., Hassan. S.A., Huang, P., Naton, E., Suter, H. and Viggiani, G Results of a joint pesticide test programme by the working group: pesticides and beneficial arthropods. Entomophaga 23, 231-236 (1980).
6. Tillman, J.A., Seybold, S.J., Jurenka, R.A., Blomquist, G,J.. Insect pheromones - an overview of biosynthesis and endocrine regulation. Insect Biochem. Mol. Biol. 29, 481-514 (1999).
7. Rafaeli, A. and Gileadi, C. Modulation of the PBAN-induced pheromonotropic activity in Helicoverpa armigera. Insect Biochem. Molec. Biol. 25, 827-834 (1995).
8. Rafaeli, A., Soroker, V. Influence of diel rhythm and brain hormone on hormone production in two Lepidopteran species. J. Chem. Ecol. 15, 447-455 (1989).
9. Soroker, V and Rafaeli, A. In vitro hormonal stimulation of 14C acetate incorporation by Heliothis armigera pheromone glands. Insect Biochem. 19, 1-15 (1989).
10. Dunkelblum, E., Gothilf, S., Kehat, M. Identification of the sex pheromoe of the cotton bollworm, Heliothis armigera, in Israel. Phytoparasitica 8, 209-211 (1980).
11. Eliyahu, D., Applebaum, S.W., Rafaeli, A, Moth sex-pheromone biosynthesis is inhibited by the herbicide, Diclofop. Pestic. Biochem. Physiol. 77 75-81 (2003).
12. British Crop Protection Council, CDS Tomlin (ED), Farnham, GB, "The pesticide manual", 12th ed., n° 232, p. 279 and n° 767, p. 914-915.
13. Jelenska et al. The Carboxyl Transferase Activity of the Apicoplast Acetyl-CoA carboxylase of Toxoplasma gondii is the Target of Aryloxyphenoxypropionate inhibitors. J. Biol. Chem., Vol. 2007, n° 26, 23208-23215 (2002).

Herbicides and plant growth regulators may be classified by their mode of action, i.e. by the specific target in the synthetic pathway in the desired plant they are aimed to inhibit or control. Such specific targets may be, for example, seed germination (dinitoanilines), branched chain amino acid synthesis (ALS or AHAS) such as the sulfonylureas and imidazolinones, lipid synthesis (Esprocarb), cell division inhibitor (chloroacetamide) etc. Herbicides or their metabolic intermediates, as many other synthetic moieties, may be toxic to other kinds of living organisms. These chemical moieties may accumulate and disturb the living organism's life cycle. However, the differences between the metabolic and growth systems of plants and those of insects, fungi and mammals render many of the herbicides as non-toxic to immediate growth and development of such organisms.

### SUMMARY OF THE INVENTION

The present invention is based on the findings that herbicides whose target of action is inhibition of eukaryotic-type Acetyl-CoA carboxylase in the chloroplast of certain plants may inhibit Acetyl-CoA carboxylase function in insect pests thereby leading to inhibition of biosynthetic pathways regulating reproductive function.

Thus the present invention is directed to the use of inhibitors of eukaryotic-type Acetyl-CoA carboxylase for controlling insect pests. The inhibitors are selected from aryloxyphenoxy propionates and cyclohexandione oxime herbicides or their mixtures. Preferably the arylphenoxypropionate is diclofop acid or diclofop-methyl and the cyclohexanedione oxime is tralkoxydim.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:

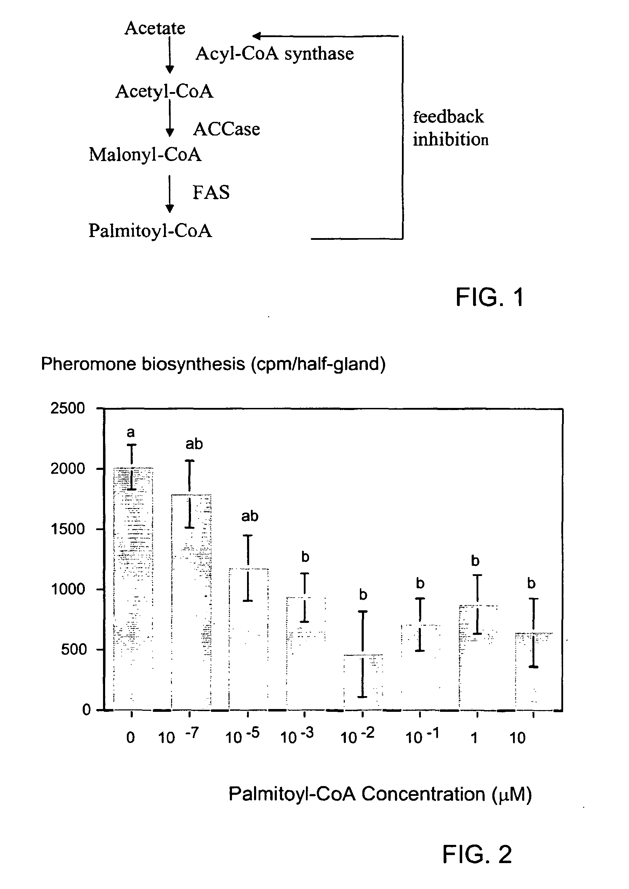

**Fig.1** is a schematic diagram showing the initial steps involved in fatty acid biosynthesis and the three key enzymes involved in the process; Acyl-CoA Synthase, ACCase (acetyl coenzymeA carboxylase) and FAS (fatty acid synthetase).
**Fig. 2** shows the effect of addition of palmitoyl-CoA on the production of pheromone in pheromone producing cells *in vitro* in the presence of 0.01 µM *Hez-*PBAN (Helicoverpa zea-PBAN). The histograms demonstrate the incorporation of ¹⁴C (from ¹⁴C-acetate) in the presence of PBAN and in increasing concentrations of palmitoyl-CoA. The data represents the mean ±SEM of at least 8 replicates. Different letters indicate a significant difference (Anova).

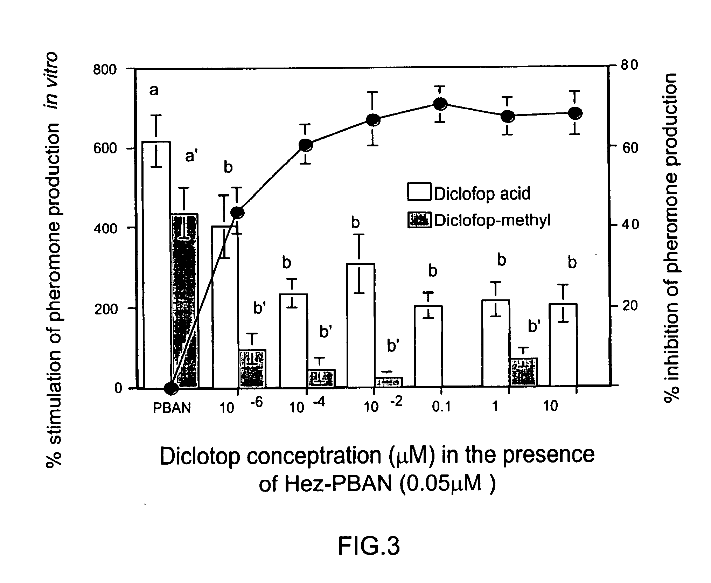

**Fig. 3** shows the inhibitory effect of diclofop acid and diclofop methyl on the response to *Hez*-PBAN (0.05µM) *in vitro*. Histograms depict the percentage of stimulation of *de novo* pheromone biosynthesis as a result of PBAN and in the presence of various concentrations of diclofop acid or diclofop methyl. The data represent the means ± SEM of at least 47 replicates; different letters indicate a significant difference (Anova). The data were transformed to also show the level of inhibition at the various diclofop acid concentrations.

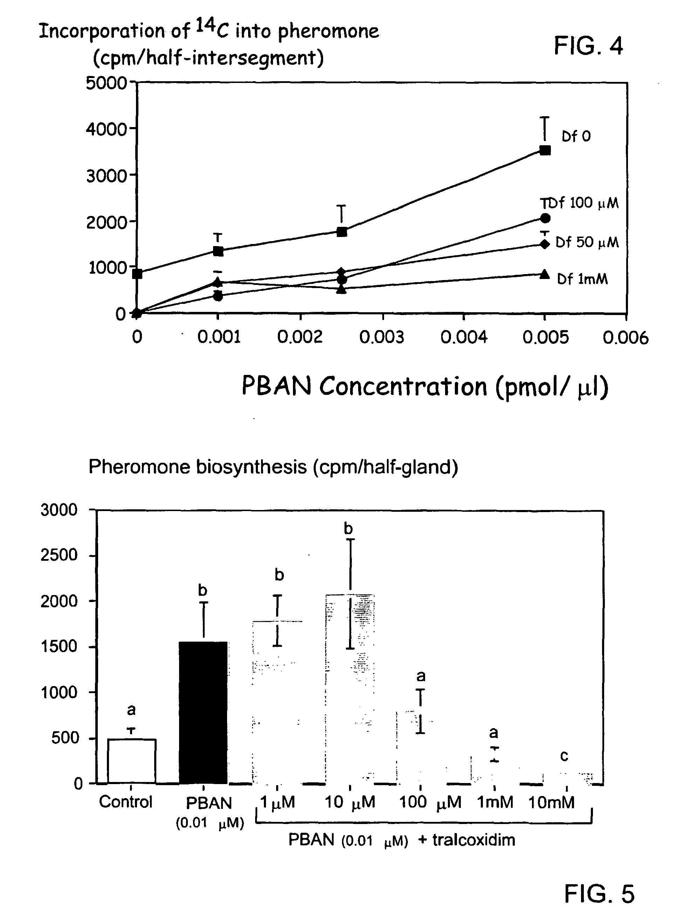

**Fig. 4** shows the inhibitory effect of diclofop-methyl (several concentrations) on the response to various concentrations (pmol range) of *Hez-*PBAN *in vitro.* Points depict the incorporation of ¹⁴C into *de novo* pheromone biosynthesis as a result of the presence of PBAN. The data represents the mean ± SEM.
**Fig. 5** shows the inhibitory effect of tralkoxydim on the response to *Hez-*PBAN (0.01µM) *in vitro.* The histograms depict ¹⁴C incorporation levels from ¹⁴C-acetate in control pheromone glands, as a result of Hez-PBAN, and in the presence of *Hez*-PBAN with various concentrations of tralkoxydim. The data represents the means ± SEM of at least 6 replicates; different letters indicate a significant difference (Anova).

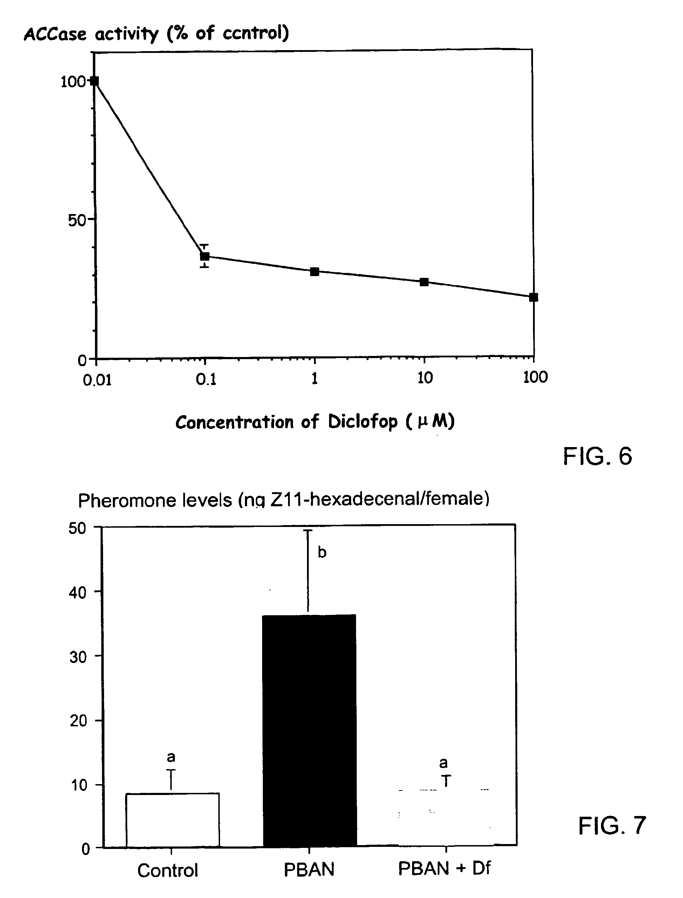

**Fig. 6** shows the activity of ACCase enzyme in the presence of increasing concentrations of diclofop demonstrating the inhibitory effect of diclofop on the enzyme. Points depict the percentage of inhibition of ACCase activity compared to uninhibited levels which serve as a control.
**Fig. 7** shows the effect of diclofop acid on pheromone production *in vivo*. Histograms depict means ± SEM of at least 14 replicates showing pheromone levels, analysed by GC, obtained after injections of Hez-PBAN (1 pmol/female) in the presence or absence of diclofop (10µmnl/female). Different letters indicate a statistically significant difference (Anova).

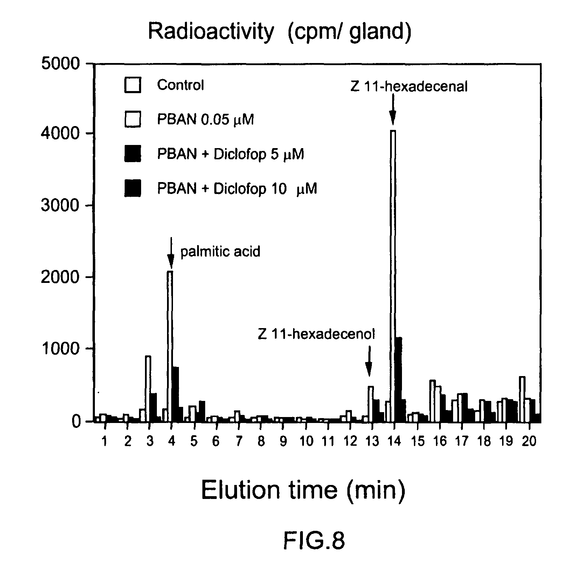

**Fig. 8** presents an elution profile showing relative levels of incorporation into pheromone component using HPLC separations of the hexane extractable products of pheromone glands after stimulation *in vitro* by *Hez*-PBAN in the presence or absence of diclofop acid.

### DETAILED DESCRIPTION OF THE INVENTION

As mentioned the present invention concerns the use of compositions comprising as their active component inhibitors of eukaryotic-type Acetyl-CoA carboxylase (ACCase) for effectively controlling insect pests. More specifically it relates to the use of compositions comprising herbicides whose route of action is by inhibiting ACCase. Such herbicides belong mainly to the known chemical families aryloxyphenoxy propionates and cyclohexandione oximes. Mixtures of herbicides from these two families may also be applied. The aryloxyphenoxy propionates are selected from the group consisting of clodinafop-propargyl, clodinafop, cyhalofop-butyl, cyhalofop, diclofop-methyl, diclofop, fenoxaprop-P-ethyl, fenoxaprop, fluazifop-butyl, fluazifop-P-butyl, fluazifop, haloxyfop, propaquizafop, quizalofop, quizalofop-P or their mixtures. The cyclohexandione oximes are selected from the group consisting of alloxydim, BAS 625 H, butroxydim, clethodim, cycloxydim, sethoxydim, tepraloxydim, tralkoxydim or their mixtures.

Commercial, grass-selective herbicides specifically inhibit ACCase, which occurs in prokaryotic and eukaryotic forms in nature. The prokaryotic form (insensitive to 2-aryloxyphenoxypropionate herbicides) is composed of dissociable polypeptides, whereas the eukaryotic form is a homodimer of a multifunctional protein. In plants, dicotlyedons contain both types of enzyme, an eukaryotic form in the cytosol and a prokaryotic one in the plastids. However, grasses have enzymes of the eukaryotic type in both compartments² rendering the grasses sensitive to 2-aryloxyphenoxypropionate herbicides. In mammals, ACCase is a multifunctional polypeptide typical of the eukaryotic² ACCase type. A limited and reversible toxicity to field rodents has been observed in laboratory studies, which may be significant under chronic exposure. The inhibitory action of 2-aryloxyphenoxyproprionate herbicides on rat-liver ACCase may be attributed to conjugation of such inhibitors to CoA³. ACCase activity has been assayed in several insect species representing different orders, including the silkmoth, *Bombyx mori*⁴ but in all instances the emphasis has been on lipogenesis. Under field conditions, diclofop is relatively non-toxic to bees and to beneficial insects⁵. The commercial herbicide, diclofop-methyl itself does not pose a potential threat to the environment and diclofop acid, the active free acid hydrolyzed from the methyl ester, is regarded as even less toxic and less persistent in the environment than is the parent compound. Interference in ACCase activity is not taken into account in evaluations of environmental impact of 2-aryloxyphenoxyproprionate herbicides.

Mating receptivity in many insects is evidenced by production and timely release of a blend of species-specific female sex pheromones¹. Mating frequency and reproductive success of insects is frequently based on release of sex pheromones and co-specific attraction. Absence of pheromone production indicates that the female is sexually non-receptive. Many insect species utilize precursors of fatty acid biosynthesis for pheromone biosynthesis⁶. In nocturnal moths, female sex pheromones are controlled by the photoperiodic release of the neuropeptide Pheromone Biosynthesis Activating Neuropeptide (PBAN) into the insect blood system. They are produced in the pheromone gland, situated between the intersegmental membrane connecting the ultimate and penultimate abdominal segments of the female, and are derived from fatty acid precursors. The effect of PBAN on the different steps in the biosynthetic pathway has been investigated in several lepidopteran species but the key rate-limiting enzymes involved have not been conclusively established. From the available data¹ it appears that the rate-limiting step for PBAN may be either the initiation of fatty acid biosynthesis or the reduction of fatty acids. ACCase is a key enzyme in the initiation of fatty acid biosynthesis from precursor acetyl-CoA. **Fig. 1** is a schematic diagram showing the initial steps involved in fatty acid biosynthesis and the three key enzymes involved, Acyl-CoA Synthase, ACCase (acetyl coenzyme A carboxylase) and FAS (fatty acid synthetase). In order to identify a possible rate-limiting step for the action of the PBAN in the process of producing pheromones, the incorporation of three possible precursors of various steps shown in **Fig. 1** were measured in the presence and absence of PBAN. The selected precursors are ¹⁴C-acetate, ¹⁴C-acetyl-CoA and ³H-palmitic acid. The comparative results are shown in Table 1.

**Table 1:**

| **Precursor** | **Radio-label incorporation levels (cpm/half gland)** ± **mean SEM** | |
|---|---|---|
| | Control | PBAN stimulated (0.01µM) |
| ¹⁴C-acetate | 225±31.2 (7) | 3809±689 (9) |
| ¹⁴C-acetylCoA | 70±16.8(10) | 232±27.8 (10) |
| ³H-palmitic acid | 3657±1503(3) | 4645±2242(3) |

Due to the low permeability rate of acetyl CoA, its levels of incorporation were significantly lower than those of the acetate; nevertheless, PBAN significantly increased the levels of incorporation of both acetylCoA and acetate into the pheromone. Addition of palmitic acid did not affect the pheromonotropic action of PBAN (data not shown). On the other hand, as shown in **Fig. 1****,** palimitoyl-CoA is considered to be a feedback inhibitor of the ACCase activity and indeed as shown in **Fig. 2****,** addition of palmitoyl-CoA affects the production of pheromone inhibiting its biosynthesis. Such an inhibition by palmitoyl-CoA indicates the importance of ACCase in PBAN induced pheromone production.

Two distinct assay systems were applied in order to determine the inhibition of PBAN-induced pheromone production, elicited by aryloxyphenoxy propionates and cyclohexandione oximes such as diclofop, diclofop-methyl and tralkoxydim. The first assay monitors *de novo* pheromone production by isolated pheromone glands *in vitro* according to the method of Rafaeli and Gileadi⁷ (Experimental Section). The second assay, monitors sex pheromone production *in vivo* by decapitated female moths that are incapable of pheromone production unless stimulated by PBAN (Experimental section).

Turning to the *in vitro* experiments, diclofop acid, even at low concentrations in the µM range, significantly inhibits *Hez*-PBAN-activated sex pheromone production in the female moth *H*. *armigera* as shown in **Fig. 3** where the *Hez*-PBAN concentration is 0.05µM. The commercial herbicide, diclofop-methyl also significantly inhibits pheromone production to the same extent as the acid at the same range of concentration (µM) as demonstrated in **Fig. 3****.** The effect of diclofop-methyl on *in vitro* pheromone production in the presence of varying concentrations of Hez-PBAN is shown in **Fig. 4****.** Similar results of inhibition of pheromone production were found with tralkoxydim, a cyclohexanedione oxime herbicide known to affect the ACCase activity in monocotyledonous plants. The effect induced by tralkoxydim occurs at relatively higher concentrations, e.g. 100µM as shown in **Fig. 5** (Experimental Section). Turning to **Fig. 6****,** the aryloxyphenoxy propionate diclofop acid may inhibit directly as measured on partially purified-enzyme activity *in vitro* from pheromone producing tissue demonstrating the sensitivity of the partially purified-enzyme to the herbicide.

Turning to **Fig. 7** the effect of inhibition by diclofop acid of *in vivo* synthesis of pheromones induced by PBAN is given. Pheromone glands of decapitated female (Experimental section) were exposed to PBAN (1pmol/female) thus producing the pheromone Z11-hexadecenal relative to the control where no PBAN is added to the glands. Addition of diclofop acid (Df) (10µmol/female) to the PBAN-stimulated pheromone glands inhibited the production of the pheromone as evident by the fact that the pheromone levels are similar to those of the control.

### Experimental and results

### Insect culture

### General

Larvae of the noctuid moth *Helicoverpa (Heliothis) armigera* were reared in the laboratory on an artificial diet⁸ under a constant temperature of 26 ± 1 °C, 80% relative humidity and a 14h/10h (light/dark) non-diapause photoperiod. Pupae were sexed and separated, after which emerging male and female moths were collected in separate containers and fed 10% sugar water.

### Example 1: Pheromone biosynthesis and its inhibition by diclofop and tralkoxydim in vitro

Intersegmental membranes (pheromone glands) between the eighth and ninth abdominal segments were removed from 2-3 day old virgin females. After 1 h preincubation in Pipes buffered incubation medium (pH 6.6), pheromone glands were dried on tissue paper and then transferred individually to 10 µl incubation medium containing 0.25µCi [1-¹⁴C]-acetate (56mCi/mmole, NEN, Boston, USA) in the presence or absence of Hez-PBAN (Peninsula Labs, Belmont, CA, USA) and in the additional presence or absence of either diclofop acid or diclofop methyl ester (**Fig. 3**). The effect of tralkoxydim on the activity of *H. armigera* sex-pheromone glands is shown in **Fig. 5****.** Tralkoxydim (1M) was dissolved in 100% MeOH and serially diluted (MeOH concentrations did not exceed 1 %).

Incubations were performed for 3h at room temperature. In order to measure the incorporation of radiolabel from [1-¹⁴C] sodium acetate, the glands were extracted in 200µl hexane for 0.5h at room temperature and a 100µl aliquot of the upper hexane phase was measured in a β-counter. Relative levels of incorporation into the pheromone component were determined using HPLC analysis as reported previously⁹ using a Vydac C₁₈ reversed phase column and a linear gradient from 40-55% acetonitrile. Fractions were collected every minute and radioactivity determined. The radioactive elution profile (shown in **Fig. 8**) was compared to known elution times of standard palmitic acid, Z11-hexadecenol and the main pheromone product of H. armigera¹⁰, Z11-hexadecenal (Sigma, USA). In some experiments [1-¹⁴C]-acetyl CoA (Amersham Pharmacia Biotech, UK.) or [9, 10-³H]-palmitic acid (Life Science Products, Inc, Texas, USA) were substituted for [1-¹⁴C]-acetate in order to measure relative incorporation into pheromone from these precursors. The effect of palmitoyl CoA (Sigma) was also tested in a different set of experiments using [¹⁴C]-acetate as precursor (as shown in **Fig. 2**).

### Example 2: Pheromone biosynthesis and its inhibition by diclofop in vivo

*In vivo* sex pheromone production by female moths was determined in 2-day old females. The females were decapitated during the photophase of day 1 and subsequently maintained for an additional 24 h, after which they were injected with either physiological saline (control) or 1 pmol/moth *Hez*-PBAN in saline, and in the additional presence or absence of diclofop acid. Ovipositor tips (containing pheromone glands) were removed 2 h after injection and extracted for 10 min in hexane, containing 25ng tridecanyl acetate (Sigma, USA) as internal standard. The hexane extract was concentrated to 2-3µl final volume under a slow stream of N₂ and chromatographed on a 30m SE-54 fused silica capillary column (internal diameter 0.25mm) (Alltech, USA) in a Shimadzu HPLC gas chromatographic system. A temperature gradient was performed from initial 120°C to 270°C at 10°C/min, and kept for 15 min at the final temperature. The detector temperature was held at 280°C and the column inlet at 300°C. Helium was used as a carrier at a flow pressure of 22 psi. Z11-hexadecenal was quantified using the internal standard quantification methods as described previously⁹.

### Example 3: Inhibition of ACCase

The ACCase enzyme was extracted from pheromone glands separated on TMAE column and the eluted enzyme was used. Acetyl CoA was used as a substrate that requires HCO₃⁻ where radiolabeled HCO₃⁻ was used. In the presence of the enzyme, the substrate will be converted to radiolabeled malonyl CoA (see **Fig. 1**)**.** Therefore, the difference in the level of incorporation of the radiolabeled malonyl CoA in the presence and absence of the ACCase enzyme was used to obtain the activity level of endogenous ACCase in the presence or absence of herbicides (**Fig. 6**).

## Claims

1. Use of herbicides inhibiting the action of eukaryotic-type Acetyl-CoA carboxylase for controlling **insect** pests.

2. Use according to claim 1, wherein said eukaryotic-type Acetyl-CoA carboxylase inhibitors are selected from arylphenoxypropionates, cyclohexanedione oximes, or their mixtures.

3. Use according to claim 2, wherein said arylphenoxypropionate are selected from the group consisting of clodinafop-propargyl, clodinafop, cyhalofop-butyl, cyhalofop, diclofop-methyl, diclofop, fenoxaprop-P-ethyl, fenoxaprop, fluazifop- butyl, fluazifop-P-butyl, fluazifop, haloxyfop, propaquizafop, quizalofop, quizalofop-P or their mixtures.

4. Use according to claim 2, wherein said cyclohexanedione oximes are selected from the group consisting of alloxydim, BAS 625 H, butroxydim, clethodim, cycloxydim, sethoxydim, tepraloxydim, tralkoxydim.

5. Use according to claim 2 wherein said arylphenoxypropionate is diclofop acid or diclofop-methyl and said cyclohexanedione oxime is tralkoxydim.

## Patentansprüche

1. Verwendung von Herbiziden, welche die Wirkung einer Acetyl-CoA-Carboxylase vom eukaryotischen Typ inhibieren, zum Kontrollieren von Insektenschädlingen.

2. Verwendung nach Anspruch 1, worin die Inhibitoren der Acetyl-CoA-Carboxylase vom eukaroytischen Typ ausgewählt sind aus Arylphenoxypropionaten, Cyclohexandionoximen und deren Mischungen.

3. Verwendung nach Anspruch 2, worin die Arylphenoxypropionate ausgewählt sind aus der Gruppe, bestehend aus Clodinafop-Propargyl, Clodinafop, Cyhalofop-Butyl, Cyhalofop, Diclofop-Methyl, Diclofop, Fenoxaprop-P-Ethyl, Fenoxaprop, Fluazifop-Butyl, Fluazifop-P-Butyl, Fluazifop, Haloxyfop, Propaquizafop, Quizalofop, Quizalofop-P und deren Mischungen.

4. Verwendung nach Anspruch 2, worin die Cyclohexandionoxime ausgewählt sind aus der Gruppe, bestehend aus Alloxydim, BAS 625 H, Butroxydim, Clethodim, Cycloxydim, Sethoxydim, Tepraloxydim und Tralkoxydim.

5. Verwendung nach Anspruch 2, worin das Arylphenoxypropionat Diclofopsäure oder Diclofop-Methyl ist und das Cyclohexandionoxim Tralkoxydim ist.

## Revendications

1. Utilisation d'herbicides inhibant l'action d'une Acétyl-CoA carboxylase eucaryote pour lutter contre les insectes.

2. Utilisation selon la revendication 1, dans laquelle lesdits inhibiteurs de l'Acétyl-CoA carboxylase eucaryote sont sélectionnés parmi les arylphénoxypropionates, des cyclohexanedione oximes ou leurs mélanges.

3. Utilisation selon la revendication 2, dans laquelle ledits arylphénoxypropionates sont sélectionnés parmi le groupe consistant en le clodinafop-propargyle, le clodinafop, le cyhalofop-butyle, le cyhalofop, le diclofop-méthyle, le diclofop, le fénoxaprop-P-éthyle, le fénoxaprop, le fluazifop-butyle, fluazifop-P-butyle, le fluazifop, le haloxyfop, le propaquizafop, le quizalofop, le quizalofop-P ou leurs mélanges.

4. Utilisation selon la revendication 2, dans laquelle lesdits cyclohexanedione oximes sont sélectionnés parmi le groupe consistant en l'alloxydime, le BAS 625 H, le butroxydime, le cléthodime, le cycloxyolime, le séthoxydime, le tépraloxydime et le tralkoxydime.

5. Utilisation selon la revendication 2, dans laquelle ledit arylphénoxypropionate est l'acide diclofop ou le diclofop-méthyle et ledit cyclohexanedione oxime est le tralkoxydime.
